# EUROPÄISCHE PATENTSCHRIFT

(11) **EP 4 359 189 B1**
(45) Veröffentlichungstag und Bekanntmachung des Hinweises auf die Patenterteilung: **12.02.2025**
(21) Anmeldenummer: 22730389.8
(22) Anmeldetag: 18.05.2022
(51) Int. Cl.: B29C 44/14, B32B 5/18, B29C 44/12, B32B 1/00, B32B 3/30, B32B 5/02, B32B 5/20, B32B 27/06, B29C 44/36

(54) **VERFAHREN ZUM HERSTELLEN EINES VERKLEIDUNGSTEILS FÜR EIN FAHRZEUG SOWIE DAMIT HERGESTELLTES VERKLEIDUNGSTEIL**
METHOD OF MANUFACTURE OF A TRIM PART FOR A VEHICLE AND TRIM PART MADE THEREOF
PROCEDE DE FABRICATION D'UNE PIECE DE GARNITURE POUR VEHICULE ET PIECE DE GARNITURE FABRIQUEE A CE TITRE

(30) Priorität: 25.06.2021 DE 102021116451
(43) Veröffentlichungstag der Anmeldung: 01.05.2024
(73) Patentinhaber: Ascorium GmbH, 53639 Königswinter (DE)
(72) Erfinder: FARINON, Rudi, 9230 Wetteren (BE); TROSSAERT, Geert, 9230 Wetteren (BE); VANLANDSCHOOT, Koen, 9230 Wetteren (BE); VANLUCHENE, Yvan, 8790 Waregem (BE)
(74) Vertreter: Haverkamp Patentanwälte PartG mbB
(86) Internationale Anmeldenummer: PCT/EP2022/063388
(87) Internationale Veröffentlichungsnummer: WO 2022/268414

(56) Entgegenhaltungen:
- DE-A1- 102005 052 344
- DE-A1- 102010 023 034
- DE-A1- 102015 201 898
- DE-U1- 202008 017 784

## Beschreibung

Die Erfindung betrifft ein Verfahren zum Herstellen eines Verkleidungsteils, insbesondere für den Innenraum eines Fahrzeuges, bei welchem Verfahren ein Trägersubstrat gegenüber einer flexiblen Dekorschicht unter Zwischenschaltung eines Schaumauftrages positioniert und mit diesem adhäsiv verbunden wird. Beschrieben ist ferner ein mit diesem Verfahren hergestelltes Innenverkleidungsteil, wobei die zur Bildung der Schaumlage verwendete Rohmasse, mit einem Gas als physikalisches Treibmittel aufgeschäumt, auf die Rückseite der Dekorschicht und/oder der zur Dekorschicht weisenden Seite des Trägersubstrates als reaktiver expandierter Schaumrohmasse aufgetragen wird.

Derartige Verkleidungsteile befinden sich als Innenverkleidungsteile beispielsweise in Kraftfahrzeugen in Form von Instrumententafelabdeckungen, Türverkleidungen, Handschuhfächern und dergleichen. Derartige Verkleidungsteile werden beispielsweise auch bei Booten auch im Außenbereich eingesetzt. Derartige Verkleidungsteile umfassen ein steifes Trägersubstrat, welches fahrzeugchassisseitig befestigt wird. Das Trägersubstrat kann zum Tragen von Auf- oder Anbauteilen, beispielsweise auch elektrischen/elektronischen Aggregaten dienen. Ein solches Trägersubstrat ist typischerweise ein aus PP oder ABS hergestelltes Kunststoffspritzgussteil. Die Sichtseite eines solchen Innenverkleidungsteils wird durch eine Dekorschicht gebildet. Die Dekorschicht ist flexibel, kann, insbesondere wenn es sich bei dieser um eine Kunststoffschicht, beispielsweise aus Polyurethan hergestellt, auch elastische Eigenschaften aufweisen. Um dem Verkleidungsteil eine sogenannte Soft-Touch-Eigenschaft zu verleihen, befindet sich zwischen der Dekorschicht und der Trägerschicht eine elastische Weichschaumlage. In aller Regel ist die Dicke einer solchen Schaumlage nur mit wenigen Millimetern bemessen, typischerweise 3 bis 8 mm. Eingestellt wird die durch die Schaumlage bereitgestellte Haptik, mithin die Härte derselben, maßgeblich durch die Wahl der Schaumrohmasse, den Grad der Expansion derselben sowie die Dichte der Schaumlage.

Beim klassischen Hinterschäumen zum Herstellen eines solchen Verkleidungsteils wird in eine geöffnete, mehrteilige Form die Dekorschicht eingelegt oder an der einen Formhälfte durch Einspritzen einer Kunststoffmasse erzeugt. Auf die Rückseite der Dekorschicht wird anschließend eine reaktive schaumformende Rohmasse aufgetragen. Dann wird die Form geschlossen, wobei die andere Werkzeughälfte das Trägersubstrat trägt. In der geschlossenen Form ist zwischen dem Trägersubstrat und der Dekorschicht ein vordefinierter Spalt belassen. Die reaktive schaumformende Rohmasse enthält ein chemisches Treibmittel. Hierbei handelt es sich um Wasser. Infolge der stattfindenden Reaktion der die Schaum bildenden Komponenten - bei Polyurethan sind dieses die Polyol- und IsocyanatKomponenten -, wird die Rohmasse polymerisiert und gleichzeitig aufgrund einer Isocyanat-Wasser-Reaktion, durch die Gas freigesetzt wird, aufgeschäumt. Zum Abschluss des Vernetzungsprozesses ist die Schaumlage zwischen der Dekorschicht und dem Trägersubstrat gebildet. Zugleich wird der Vernetzungsprozess genutzt, damit der Schaum adhäsiv sowohl an die Dekorschicht als auch an das Trägersubstrat angebunden wird. Haftvermittler können die adhäsive Anbindung der Schaumlage an die Dekorschicht und das Trägersubstrat unterstützen. Eingesetzt werden für die Ausbildung derartiger Schaumlagen beispielsweise eines Fahrzeuginnenverkleidungsteils typischerweise Polyurethanweichschäume mit Dichten zwischen 150 - 200 kg/m³.

Zu berücksichtigen ist bei diesem Herstellungsverfahren, dass während des chemischen Aufschäumens und der diese begleitenden Polymerisation mitunter recht hohe Drücke und Temperaturen innerhalb der Form erzeugt werden. Dieses stellt nicht nur hohe Anforderungen an die für diese Zwecke eingesetzten Formen bzw. Formenteile. Zu beachten ist hierbei auch, dass die Dekorschicht eine Beschaffenheit aufweisen muss, die diesen Einflüssen, insbesondere den Temperaturen, standhält, und zwar auch bei einer unter Umständen sich einstellenden unterschiedlichen Temperaturverteilung in der Form. Letzteres darf nicht eine temperaturabhängig unterschiedliche Anmutung auf der Sichtseite der Dekorschicht zur Folge haben. Werden als Dekorschichten bei diesem Verfahren Materialien verwendet, die Öffnungen aufweisen, kann es aufgrund der in einer solchen Form herrschenden Drücke von durchaus 2 - 5 bar zu Schaumdurchbrüchen kommen, bei denen Schaum auf die Sichtseite der Dekorschicht gepresst wird. Daher ist es erforderlich, bei einem Einsatz derartiger Materialien zum Bereitstellen der Dekorschicht mitunter aufwendige Abdichtungsmaßnahmen vor dem Auftrag der reaktiven, noch nicht expandierten Rohmasse durchzuführen.

Aus DE 10 2011 005 343 A1 ist ein Verfahren zum Herstellen eines solchen Verkleidungsteils in einer offenen Form bekannt. Eingesetzt wird bei diesem Verfahren ein niedrig energetisches Schaumsystem, das heißt ein Schaumsystem, welches keine größeren Drücke verursacht. Dabei ist der Aggregatszustand der auf die Rückseite der Dekorschicht aufgebrachten reaktiven Schaumrohmasse so gewählt, dass diese nach Auftragen nicht fließt. Dieses erfolgt vor dem Hintergrund, dass die Schaumrohmasse dann auch in in der Dekorschicht vorhandene Öffnungen nicht eindringt. Wenn eine Anbindung des Trägersubstrats ohne zusätzlichen Haftvermittler oder anderer Klebstoffe gewünscht wird, kann dieses in die Oberfläche der Schaumrohmasse, wenn der Aufschäumprozess beendet oder zumindest weitestgehend beendet ist, eingedrückt werden. Allerdings darf zum Zeitpunkt der Montage des Trägersubstrates die sogenannte Klebefreizeit der Schaummasse noch nicht erreicht sein. Schließlich muss der Schaum an seiner Oberfläche noch klebrig genug sein, um die gewünschte adhäsive Anbindung zu ermöglichen.

Aus DE 20 2008 017 784 U1 ist ein Innenverkleidungsteil mit saugfähigem Dekormaterial bekannt. Gemäß dem in diesem Stand der Technik beschriebenen Verfahren zum Herstellen eines solchen Innenverkleidungsteils wird eine zum Teil physikalisch expandierte Schaumrohmasse aufgetragen. Diese enthält, wie dieses an sich bekannt ist, ein chemisches Treibmittel. Um einen Schaumauftrag auf ein saugfähiges Dekormaterial zu gestatten, ohne dass dieses durchschlägt, ist vorgesehen, dass zunächst einige Zeit nach Applikation der Schaumrohmasse abgewartet wird, bis durch einen bereits fortgeschrittenen Vernetzungsprozess die Viskosität hinreichend hoch ist, damit durch Anbringen des Trägersubstrates die Schaumrohmasse durch die Dekorschichten nicht hindurchgedrückt werden kann. Insofern unterscheidet sich das in diesem Stand der Technik beschriebene Verfahren nicht von dem in DE 10 2011 005 343 A1 beschriebenen Verfahren.

DE 10 2015 201 898 A1 offenbart ein Verfahren und eine Vorrichtung zum Herstellen eines hinterschnittenen Formteils. Dabei wird auf eine Lackschicht ein reaktiver Kunststoff appliziert, auf dem anschließend die Trägerstruktur positioniert wird. Positioniert wird die Trägerstruktur, die mit einem gewissen Abstand zu der Lackschicht in einer Form gehalten ist, nachdem der reaktive Kunststoff begonnen hat, aufzuschäumen. Durch das weitere Aufschäumen wird der verbliebene Luftspalt zwischen der Trägerstruktur und dem reagierenden Kunststoff gefüllt.

DE 10 2010 023 034 A1 beschreibt ein Verfahren, bei dem in ein unteres Werkzeug eine Dekorschicht und in ein zweites Werkzeug eine Verstärkungsvorrichtung mit Abstandshaltern eingelegt wird. In einem nachfolgenden Schritt wird das Werkzeug zusammengefahren, sodass sich beide Elemente in ihrem bestimmungsgemäßen Abstand zueinander befinden. Nachfolgend wird der Bereich zwischen der Dekorschicht und dem Trägerteil ausgeschäumt.

Auch wenn mit diesem vorbekannten Verfahren ein Hinterschäumen von Öffnungen aufweisenden Dekorschichten möglich ist, muss das Zeitfenster, in dem das Trägersubstrat in die noch nicht vollständig vernetzte Schaumoberfläche eingedrückt wird, sehr genau abgepasst und eingehalten werden. Schließlich soll die aufgetragene schaumformende Rohmasse fast vollständig aufgeschäumt sein, bevor das Trägersubstrat damit in Kontakt gebracht wird. Zum anderen darf die Klebefreizeit des Schaums, also derjenige Zeitpunkt, in dem der Schaum nicht mehr klebrig ist, noch nicht erreicht sein. Dieses Zeitfenster beträgt in aller Regel nur wenige Sekunden. Wird das Trägersubstrat in den expandierten, fast vollständig polymerisierten Schaum eingedrückt, wird der Schaum komprimiert. Letzteres führt zu einer über die flächige Erstreckung des Innenverkleidungsteils unterschiedlichen Härte und damit einer über die flächige Erstreckung unterschiedlichen Haptik, wenn der Abstand zwischen der Rückseite der Dekorschicht und dem Trägersubstrat und somit die Dicke der Schaumlage über die flächige Erstreckung des Innenverkleidungsteils nicht einheitlich ist. Dann ist die Härte der Schaumlage in denjenigen Bereichen des Innenverkleidungsteils größer, in denen der Abstand zwischen der Dekorschicht und dem Trägersubstrat kleiner ist. Dieses gilt insbesondere für Trägersubstrate, die aufgrund anderer daran gestellter Anforderungen nicht in einem einheitlichen Abstand zur Dekorschicht bereitgestellt werden können. Dieses kann, wenn überhaupt, dann nur höchst unzureichend, durch ein unterschiedlich dickes Auftragen der schaumformende Rohmasse ausgeglichen werden.

Ein Verfahren gemäß dem Oberbegriff des Anspruchs 1 ist aus DE 10 2005 052 344 A1 bekannt.

Ausgehend von diesem diskutierten Stand der Technik liegt der Erfindung daher die Aufgabe zugrunde, ein Verfahren zum Herstellen eines Innenverkleidungsteils, welches zwischen einer Dekorschicht und einem Trägersubstrat eine weichelastische Schaumlage hat, vorzuschlagen, mit dem die vorstehend aufgezeigten Nachteile vermieden und im Übrigen die Designfreiheiten zum Auslegen eines solchen Innenverkleidungsteils weniger eingeschränkt sind. Ferner wäre es wünschenswert, wenn das Herstellungsverfahren vereinfacht und insbesondere auch zeitlich verkürzt werden könnte.

Gelöst wird diese Aufgabe durch ein eingangs genanntes, gattungsgemäßes Verfahren mit den Merkmalen des Anspruchs 1.

Bei diesem Verfahren wird die Schaumrohmasse bereits aufgeschäumt und expandiert aufgetragen, und zwar entweder auf die Rückseite der Dekorschicht oder auf die zur Dekorschicht weisenden Seite des Trägersubstrats oder auf die Dekorschicht und das Trägersubstrat. Da die Schaumrohmasse bereits in ihrem aufgeschäumten Zustand aufgetragen wird, können durchaus auch zwei derartige Schaumauftragsschichten, aufgetragen auf die Rückseite der Dekorschicht und auf die zu der Dekorschicht weisenden Seite des Trägersubstrates, aufgetragen und dennoch eine im Ergebnis homogene Schaumlage bereitgestellt werden. Als Treibmittel dient ein physikalisches Treibmittel, und zwar ein Gas, beispielsweise Kohlendioxid oder Stickstoff. Es versteht sich, dass auch ein anderes geeignetes Gas als Treibmittel eingesetzt werden kann. Im Unterschied zu herkömmlichen Verfahren, bei denen die Rohmasse mit chemischen Treibmitteln aufgeschäumt wird, entsteht dieses nicht erst durch eine chemische Reaktion innerhalb der aufgetragenen Rohmasse. Der Schaumauftrag ist offenporig. Auch eine Kombination dieses bereits expandierten Schaumauftrages mit anderen Schaumaufträgen und/oder Schaumschichten ist möglich, beispielweise wenn ein erster Schaumauftrag auf die Rückseite der Dekorschicht, beispielsweise als offenporiger Schaumauftrag, wie vorstehend beschrieben, und ein zweiter Schaumauftrag auf die zur Dekorschicht weisende Seite des Trägersubstrates als geschlossenporiger Schaumauftrag aufgetragen wird oder durch ein anderes Verfahren an das Trägersubstrat angeschlossen worden ist. Eine solche Kombination kann auch so durchgeführt werden, dass die Dekorschicht in einem ersten Schritt mit einer Schaumschicht rückseitig beschichtet wird, bevor der erfindungsgemäße expandierte Schaumauftrag aufgetragen wird. Um den Kohlendioxidfußabdruck bei der Herstellung eines solchen Verkleidungsteils gering zu halten, wird man vorzugsweise als gasförmiges Treibmittel kein Kohlendioxid, sondern beispielsweise Stickstoff verwenden.

Da der Schaumauftrag bereits expandiert aufgetragen wird, kann das Trägersubstrat unverzüglich nach dem applizierten expandierten Schaumauftrag gegenüber der Dekorschicht positioniert werden. Bei einem Schaumauftrag auf die Rückseite der Dekorschicht bedeutet dieses, dass das Trägersubstrat in Kontakt mit dem darauf aufgebrachten expandierten Schaumauftrag gebracht wird. Unabhängig davon, ob der Schaumauftrag auf der Dekorschicht und/oder dem Trägersubstrat aufgebracht wird, braucht im Unterschied zu vorbekannten Verfahren nicht erst die für ein chemisches Aufschäumen benötigten Zeit abgewartet zu werden, um das Trägersubstrat positionieren zu können. Bei vorbekannten Verfahren zum Positionieren des Trägersubstrates zudem diejenige Zeit abgewartet werden, bis die durch den Aufschäumprozess gebildeten Zellen aufgeplatzt sind, damit ein offenporiger Schaumauftrag gebildet wird. Ein zu frühes Positionieren des Trägersubstrates ist bei herkömmlichen Verfahren daher auch durch den Zeitpunkt der Ausbildung des offenporigen Schaums bestimmt.

Da beim Gegenstand des beanspruchten Verfahrens zum Zeitpunkt der Positionierung von Trägersubstrat gegenüber Dekorschicht unter Zwischenschaltung des Schaumauftrages dieser gerade erst begonnen hat zu polymerisieren, ist dieser zumindest noch zu einem gewissen Maße fließfähig und kann ohne weiteres verdrängt werden. Dieses wird durch die Positionierung und Einrichtung des Trägersubstrates gegenüber der Dekorschicht vorgenommen. Anschließend wird abgewartet, bis der Vernetzungsprozess zumindest weitestgehend abgeschlossen ist, bevor das Verkleidungsteil aus der Form entnommen wird. Das Verdrängen von expandiertem Schaumauftrag bringt zahlreiche Vorteile mit sich. Hierdurch kann beispielsweise innerhalb des Formspaltes zwischen der Dekorschicht und dem Trägersubstrat eine Vergleichmäßigung des typischerweise sprühend applizierten expandierten Schaumauftrages herbeigeführt werden ebenso wie das Verdrängen von zur Füllung dieses Spaltes nicht benötigtem expandiertem Schaumauftrag aus dem Formspalt heraus. Von Interesse für das herzustellende Verkleidungsteil ist in diesem Zusammenhang, dass dieses sodann unabhängig von der Materialstärke der Schaum lage zwischen der Dekorschicht und dem Trägersubstrat das Verkleidungsteil auch bei unterschiedlicher Spaltweite mit einheitlicher Härte hinterfüttert ist. Unerwünschte Schaumkompressionen werden dadurch nicht, jedenfalls nicht in einem spürbaren Maße erzeugt. Eine Schaumkompression von 5-30 %, vorzugsweise 10 - 20 %, insbesondere 10 - 15 % ist in die Ausbildung der Schaumlage einkalkuliert und ist daher nicht unerwünscht.

Wesentlich bei diesem Verfahren ist, dass das Zeitintervall, in dem das Trägersubstrat gegenüber der Dekorschicht zu positionieren ist, also beispielsweise bei einer rückseitigen Schaumauftragbeschichtung der Dekorschicht das Trägersubstrat zum adhäsiven Anbinden an den Schaumauftrag mit diesem in Kontakt zu bringen ist, deutlich größer bemessen ist. Somit ist nicht nur durch das nicht erforderliche Zuwarten, wie bei einem Einsatz von chemischen Treibmitteln, der Herstellungsprozess verkürzt, sondern auch ein in Bezug auf eine dauerhafte Reproduzierbarkeit unanfälligeres Verfahren bereitgestellt. Durch den Einsatz von Katalysatoren in der reaktiven Schaumrohmasse kann zudem die Reaktionszeit - die Zeitdauer, die benötigt wird, bis der Polymerisationsprozess abgeschlossen ist - erheblich verkürzt werden, sodass die Produktion eines solchen Verkleidungsteils diesbezüglich nochmals verkürzt werden kann. Bei einem Einsatz von chemischen Treibmitteln soll der Vernetzungsprozess erst einsetzen, wenn der Expansionsprozess abgeschlossen ist. Wird bei dem erfindungsgemäßen Verfahren beispielsweise die Rückseite der Dekorschicht mit dem expandierten Schaumauftrag versehen, wird das Trägersubstrat typischerweise in dem Zeitfenster der Reaktionszeit, nachdem 70 % derselben noch nicht erreicht sind, in Kontakt gebracht. Gleiches gilt im Falle einer Beschichtung des Trägersubstrates oder im Falle eines Schaumauftrages auf der Dekorschicht und dem Trägersubstrat. Besonders bevorzugt ist eine Ausgestaltung, bei der das Trägersubstrat positioniert wird, wenn 50 % der Reaktionszeit noch nicht abgelaufen ist. Je früher in Bezug auf die Reaktionszeit das Trägersubstrat unter Zwischenschaltung des Schaumauftrages gegenüber der Dekorschicht positioniert wird, sodass der Schaumauftrag sowohl die Dekorschicht als auch das Trägersubstrat kontaktiert, desto besser ist der adhäsive Verbund. Durch dieses im Vergleich zum Stand der Technik frühe Positionieren des Trägersubstrates gegenüber der Dekorschicht unter Zwischenschaltung des expandierten Schaumauftrages ist der Polymerisationsprozess noch nicht so weit fortgeschritten, dass eine Schaumbewegung ohne Beschädigung der Schaumstruktur erfolgt. Dieses wird beim Gegenstand der Erfindung in geschickter Weise genutzt.

Das relativ große Zeitfenster zum Positionieren des Trägersubstrates erlaubt auch eine Herstellung größerer Verkleidungsteile, bei denen der Auftrag des expandierten Schaums, typischerweise durch Sprühen, etwas Zeit benötigt, ohne dass Nachteile in Bezug auf eine Positionierung des Trägersubstrates gegenüber der Dekorschicht in Bezug auf die Schaumqualität oder eines adhäsiven Verbundes des Schaumauftrages an der Dekorschicht und dem Trägersubstrat in Kauf genommen werden müssten.

Die Möglichkeit, einen Teil des expandierten Schaumauftrages durch das Trägersubstrat zu verdrängen, erlaubt eine Verfahrensführung, den Schaumauftrag mit einer größeren Dicke als tatsächlich benötigt auszubilden, mithin den Schaumauftrag mit einem größeren Volumen als benötigt vorzunehmen. Dieses ist in einem bevorzugten Ausführungsbeispiel vorgesehen. Der Abstand zwischen der Dekorschicht und dem Trägersubstrat kann über Abstandselemente, beispielsweise Abstandsstifte, beispielsweise als Teil des Trägersubstrates oder integriert in die Form, bereitgestellt werden. Auch der Einsatz eines Positionierungskalibers ist durchaus möglich. Das Verdrängen einer gewissen Menge an expandiertem Schaumauftrag und somit das Modellieren bzw. Verteilen des Schaumauftrages durch das Trägersubstrat durch eine Relativbewegung zwischen dem Trägersubstrat und der Dekorschicht führt zu einem bezüglich seiner Kompression homogenen Schaum in dem Zwischenraum zwischen der Dekorschicht und dem Trägersubstrat bei gleichbleibender Schaumqualität.

Bei diesem Verfahren kann aufgrund der fließfähigen Eigenschaft des expandierten Schaumauftrages zum Zeitpunkt des Positionierens des Trägersubstrates gegenüber der Dekorschicht diese Eigenschaft genutzt werden, Schaum in Hinterschnitte des Trägersubstrates einzubringen, was zum Vorteil hat, dass dann eine Anbindung der polymerisierten Schaumlage an das Trägersubstrat nicht lediglich adhäsiv, sondern auch durch Formschluss bereitgestellt ist. Dieses gilt vor allem dann, wenn der Schaumauftrag auf der Rückseite der Dekorschicht und nicht auf das Trägersubstrat aufgetragen wird. Allein das Eindrücken des Trägersubstrats in den expandierten Schaumauftrag drückt diesen in an dem Trägersubstrat an seiner zu dem Schaumauftrag weisenden Seite vorhandene Hinterschnittstrukturen. Zur Unterstützung eines solchen Schaumauftrageingriffes in Hinterschneidungsstrukturen des Trägersubstrates an seiner zu der Dekorschicht weisenden Seite kann das Trägersubstrat auch in der Ebene der Dekorschicht, auf dem Schaumauftrag schwimmend, bewegt werden. Der im Rahmen dieser Ausführungen benutzte Begriff der Fließfähigkeit des Schaumauftrages nach begonnener Polymerisation bedeutet nicht notwendigerweise, dass der Schaum allein schwerkraftbedingt fließen muss, sondern insbesondere modellierbar und damit ohne nennenswerte Änderung seiner Konsistenz bewegbar ist. Eine gewisse Komprimierung ist möglich.

Überschüssiger Schaumauftrag kann seitlich aus dem Zwischenraum zwischen der Dekorschicht und dem Trägersubstrat herausgedrückt und beispielsweise nach Abschluss des Vernetzungsprozesses des Schaumauftrages abgeschnitten werden. Um bei einer solchen Ausgestaltung des Verfahrens ein übermäßiges Herausdrücken von expandiertem Schaumauftrag zu vermeiden, kann beim Applizieren des expandierten Schaumauftrages in dem umlaufenden Randbereich der Dekorschicht oder auch umlaufend um darin eingebrachte Eingriffsöffnungen der Schaum mit einer geringeren Dicke bzw. mit einer zum Rand oder zur Eingriffsöffnung hin geringer werdenden Dicke appliziert werden. Gemäß einer anderen Ausgestaltung ist vorgesehen, dass die Form und/oder das Trägersubstrat randlich Öffnungen bzw. Kanäle aufweist, durch die der durch das Positionieren des Trägersubstrates verdrängte Schaum aus dem Spalt zwischen der Dekorschicht und dem Trägersubstrat entweichen kann. Möglich ist es auch, dass, wenn ein Verdrängen von Schaumauftrag aus dem Zwischenraum zwischen der Dekorschicht und dem Trägersubstrat nicht oder nicht vollständig als Reaktion auf das Eindrücken des Trägersubstrates erfolgen soll, durch das Eindrücken des Trägersubstrats der Schaumauftrag komprimiert wird. Ein Komprimieren des Schaumauftrages ist dann erwünscht, wenn zusätzlich Einfluss auf die Dichte desselben genommen werden soll. Dies ist bei dem beschriebenen Verfahren möglich, da offenporiger expandierter Schaum zur Ausbildung des Schaumauftrages appliziert worden ist, da das in den Schaumzellen enthaltene Gas von einer Zelle in die nächste und somit auch aus dem Schaumauftrag herausgedrückt werden kann. Durch diese Maßnahme wird der Schaumauftrag plastisch komprimiert. Für den Fall, dass ein Schaumaustritt aus dem Zwischenraum der Dekorschicht und dem Trägersubstrat nicht gewünscht ist, kann dieser Zwischenraum randlich abgedichtet sein.

Von besonderem Vorteil bei diesem Verfahren ist ferner, dass aufgrund der gewünschten Fließfähigkeit der Schaumauftrag durch Sprühen aufgetragen werden kann. Dieses ist in einem bevorzugten Ausführungsbeispiel vorgesehen, wobei die Sprühapplikation mit einer kleinen Tröpfchengröße vorgenommen wird, wodurch die Auftragsdicke des expandierten Schaumauftrages besonders gut kontrolliert werden kann.

Infolge der Applikation eines bereits aufgeschäumten Schaumauftrages wird auch keine zusätzliche Temperatur in den zu erstellenden Verbund eingetragen. Typischerweise wird bei herkömmlichen Verfahren unter Verwendung eines chemischen Treibmittels Wasser als chemisches Treibmittel verwendet. Die diesbezügliche Reaktion ist exotherm. Da bei dem beanspruchten Verfahren zum Aufschäumen keine exotherme Reaktion benötigt wird, müssen auch keine Schrumpfungserscheinungen berücksichtigt oder in Kauf genommen werden. Zudem werden Zellöffnungsmittel als Additive in der Schaumrohmasse bei dem beanspruchten Verfahren nicht benötigt.

Diese Herstellung eines Verkleidungsteils erfolgt drucklos. Der Applikationsdruck beträgt in aller Regel weniger als 1 bar, vorzugsweise sogar weniger als 0,5 bar.

Überdies kann das Polymerisieren bei geringen Temperaturen vorgenommen werden, jedenfalls bei Temperaturen, bei denen die Dekorschicht nicht nachteilig beeinflusst.

Die Schichtdicke der auf diese Weise hergestellten Schaumlage kann durchaus 15 mm bis 20 mm betragen, insbesondere bis 10 mm, ganz insbesondere bis 5 mm. Dickenunterschiede in dem Zwischenraum zwischen der Dekorschicht und dem Trägersubstrat können aufgrund der plastischen Modellierbarkeit des Schaumauftrages auftreten.

Die Dichte des Schaumauftrages ist frei wählbar und kann beispielsweise zwischen 70 und 700 kg/m³, insbesondere zwischen 200 und 500 kg/m³ betragen. Typischerweise geht das Positionieren des Trägersubstrates gegenüber der Dekorschicht mit einer gewissen Kompression des Schaumauftrages einher. Die Dichte des Schaumauftrages kann hierdurch beispielsweise um 5 % - 30 % erhöht werden.

Bevorzugte Dichten des Schaumauftrages liegen bei etwa 250 kg/m³, wobei diese durch die Positionierung des Trägersubstrates, was mit einer Kompression des Schaumauftrages einhergeht, zu einer Erhöhung der Dichte auf beispielsweise 300 kg/m³.

Bei diesem Verfahren bildet der Zwischenraum zwischen der Dekorschicht und dem Trägersubstrat die Form, innerhalb der der Schaumauftrag polymerisiert und damit seine gewünschte Form erhält.

Die aus dem Schaumauftrag nach Abschluss der Polymerisation gebildete Schaumlage kann je nach gewünschter Anforderung als Weichschaum lage oder als halbstarre Schaumlage ausgebildet werden.

Typischerweise wird das Trägersubstrat unverzüglich nach Auftragen des expandierten Schaumauftrages auf diesem positioniert. Da die Polymerisation bereits beim Vermischen der reaktiven Komponenten - bei Polyurethan: Polyol und Isocyanat- beginnt, hat die Polymerisation und damit die Reaktionszeit zu diesem Zeitpunkt bereits begonnen. Ein Verdrängen von Schaum durch das Trägersubstrat ist, wie vorstehend bereits aufgezeigt, hierdurch jedoch nicht beeinträchtigt.

Auch wenn das vorbeschriebene Verfahren grundsätzlich in einer geschlossenen Form drucklos und ohne exotherme Erwärmung durchgeführt werden kann, wird man dieses der Einfachheit halber typischerweise in einer offenen Form vornehmen.

In einem bevorzugten Ausführungsbeispiel wird eine wasserfreie Schaumrohmasse mit einem gasförmigen Treibmittel sprühappliziert.

Auch wenn in dem vorstehend beschriebenen Ausführungsbeispiel die Applikation eines wasserfreien expandierten Schaumauftrages vorgesehen ist, besteht die Möglichkeit, dass zum Erzielen bestimmter Effekte in dem Schaumauftrag ebenfalls zu einem gewissen Anteil ein chemisches Treibmittel enthalten sein kann.

Bei der Schaumlage des hergestellten Verkleidungsteils handelt es sich typischerweise um einen Polyurethanschaum. Die Einmischung von Gas kann vor oder während der Mischung der Polyol-Komponente mit der Isocyanat-Komponente vorgenommen werden. Möglich ist es auch, eine der beiden Komponenten vor ihrer Vermischung mit Gas zu versehen. Bei einer Sprühapplikation wird Gas, typischerweise Stickstoff, der reaktiven Mischung in der Mischkammer zugeführt. Die eigentliche Volumenvergrößerung erfolgt am Ausgang der Applikationsdüse, so dass der expandierte Schaum auf der Rückseite der Dekorschicht aufgetragen wird. In WO 2007/127623 A1 ist ein Sprühverfahren beschrieben. Die die Sprühapplikation betreffenden Ausführungen in diesem Stand der Technik, wenn auch in anderem Zusammenhang durchgeführt, werden hiermit durch diese explizite Bezugnahme zum Gegenstand dieser Ausführungen gemacht. Es versteht sich, dass zur Ausbildung der Schaumlage des Verkleidungsteils auch andere polymerisierende Schäume eingesetzt werden können.

Bei der Dekorschicht kann es sich um letztendlich jede flexible folienartige Schicht handeln, wie beispielsweise eine thermoplastische Folie, eine solche aus Polyurethan, PVC, TPO, Gewebe, Leder, Kunstleder oder dergleichen. Auch druck- und temperaturempfindliche Materialien können ohne weiteres eingesetzt werden, da weder Drücke noch höhere Temperaturen bei diesem Prozess erzeugt werden. Eine solche Dekorschicht kann auch Öffnungen aufweisen. Schaumdurchbrüche, die auf der Sichtseite der Dekorschicht anhaften, sind mangels Druck im Schaumauftrag nicht zu befürchten.

Bei dem Trägersubstrat kann es sich, wie dieses bei herkömmlichen Verfahren auch der Fall ist, beispielsweise um PP- oder ABS-Kunststoffteile handeln. Diese können Öffnungen aufweisen, was aufgrund der drucklosen Applikation und Polymerisation unproblematisch ist. Zwar kann in Öffnungen im Trägersubstrat Schaumauftrag eingedrückt werden. Jedoch stellen diese keine Wegsamkeiten dar, aus denen, wie dieses bei vorbekannten Verfahren unter Verwendung von geschlossenen Formen der Fall wäre, Schaum mit Druck heraustritt. Die Applikation von halbstar expandiertem Schaum erlaubt aus diesem Grunde auch eine Verwendung von Trägersubstraten, die insgesamt perforiert oder durchlässig sind, mithin eine gewisse Permeabilität aufweisen. Somit kann es sich bei dem Trägersubstrat beispielsweise auch um Fasermatten, etwa Glasfasermatten oder Matten aus natürlichen Fasern, handeln. Im Zuge der Positionierung des Trägersubstrates gegenüber der Dekorschicht kann der Schaumauftrag in ein solches Trägersubstrat eingearbeitet werden, sodass dieses in dem Schaum eingebettet ist. Das Trägersubstrat ist dann auch formschlüssig an die Schaumlage nach Abschluss des Polymerisationsprozesses angeschlossen.

Bei dem vorbeschriebenen Verfahren kann durchaus vorgesehen sein, dass die Schaumlage aus zwei oder mehr einzelnen Schaumteillagen aufgebaut ist, die sich beispielsweise in ihrer Dichte voneinander unterscheiden. Jede dieser Schaum lagen wird als expandierter Schaumauftrag aufgetragen. Dieses steht nicht dem zuvor beschriebenen Ausführungsbeispiel entgegen, dass eine solche Schaumlage aus einzelnen Schaumteillagen gebildet und selbst wiederum auf einer Schaumschicht, als Teil der Dekorschicht oder als Teil des Trägersubstrates aufgetragen wird.

Nachfolgend ist die Erfindung anhand eines Ausführungsbeispiels unter Bezugnahme auf die beiliegenden Figuren beschrieben. Es zeigen:
- **Fig. 1:**: In einer schematisierten Darstellung eine offene Form zum Herstellen eines Fahrzeuginnenverkleidungsteils mit einer darin befindlichen Dekorschicht,
- **Fig. 2:**: die Form der Figur 1 mit der darin befindlichen Dekorschicht, hinterschäumt mit einem expandiert aufgetragenen Schaumauftrag,
- **Fig. 3a, 3b:**: ein auf der Oberseite des Schaumauftrages zu positionierendes Trägersubstrat (Figur 3a) und das auf dem Schaumauftrag positionierte Trägersubstrat (Figur 3b),
- **Fig. 4:**: das aus der Form entnommene Innenverkleidungsteil,
- **Fig. 5:**: ein Diagramm zum Darstellen des zeitlichen Verlaufes der einzelnen Prozessschritte bei der Herstellung des Innenverkleidungsteils der Figur 4,
- **Fig. 6:**: ein Diagramm entsprechend demjenigen der Figur 5, zum Darstellen des zeitlichen Ablaufes eines ebenfalls in einer offenen Form hergestellten Innenverkleidungsteils gemäß dem Stand der Technik,
- **Fig. 7a-7c:**: eine Teilschnittdarstellung durch die Anordnung einer offenen Form mit einem zu positionierenden Trägersubstrat, das eine Durchbrechung zum Ausbilden eines Durchbruches innerhalb des Verkleidungsteils (Figur 7a) aufweist, das gegenüber der Dekorschicht unter Zwischenschaltung des Schaumauftrags positionierte Trägersubstrat (Fig. 7b) und das aus der Form entnommene Verkleidungsteil mit dem darin ausgebildeten Durchbruch und
- **Fig. 8a-8c:**: eine Teildarstellung entsprechend den Darstellungen der Figuren 7a-7c mit einer anderen Ausgestaltung der Durchbruchsausbildung des Innenverkleidungsteils.

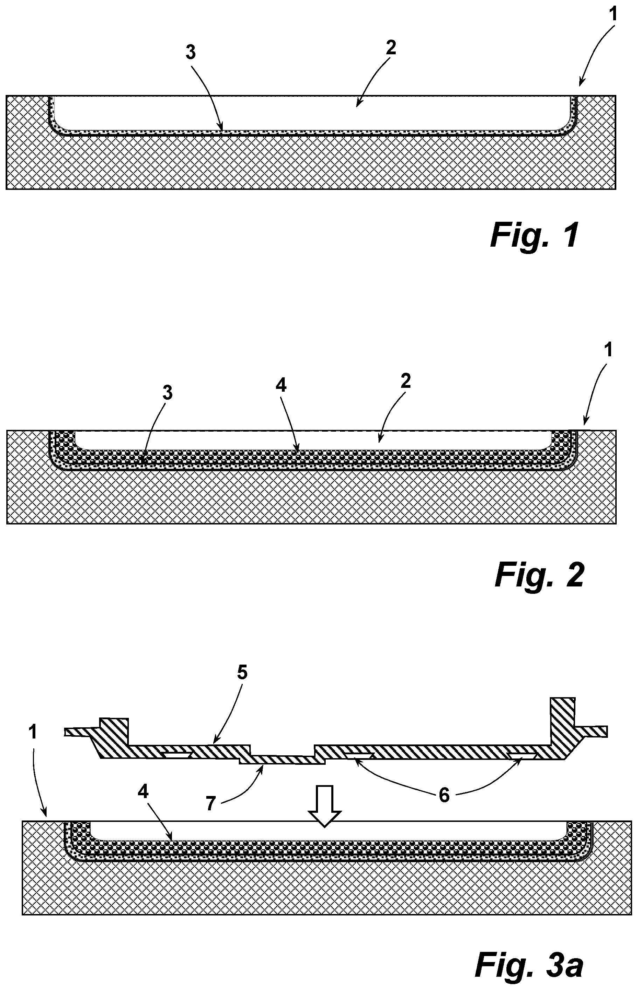

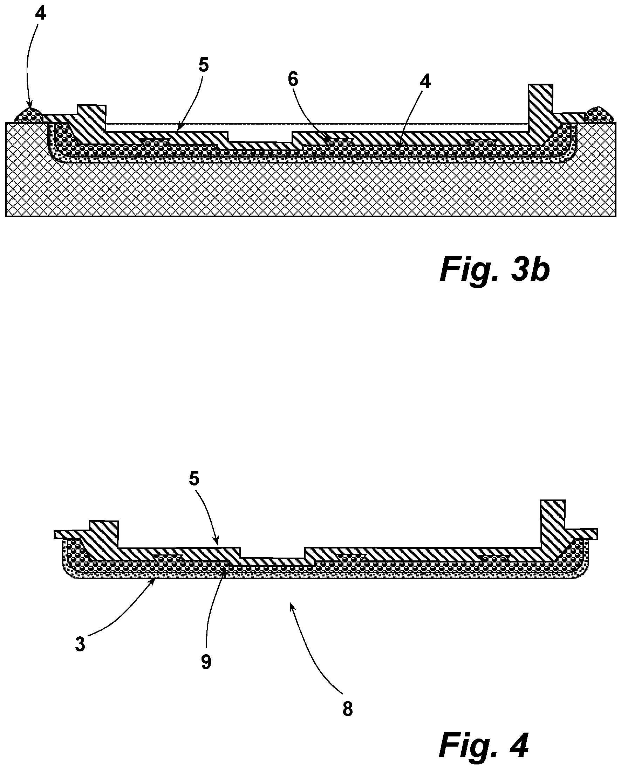

Eine offene Form 1 umfasst eine Kavität 2. In der Kavität 2 ist eine Dekorschicht 3 angeordnet. Bei dem dargestellten Ausführungsbeispiel ist die Dekorschicht 3 in der Form 1 urgeformt, und zwar bei dem dargestellten Ausführungsbeispiel durch Aufsprühen einer entsprechenden Polyurethanmasse. Die zur Kavität 2 weisende Seite der Form 1 ist mit einer lederartigen Narbung strukturiert, sodass die Dekorschicht 5 an ihrer in Figur 1 weisenden Unterseite eine Ledernarbung aufweist. Zum Ausbilden eines Innenverkleidungsteils für ein Fahrzeug wird bei dem dargestellten Ausführungsbeispiel auf die Rückseite der Dekorschicht 3 in einem nachfolgenden Prozessschritt eine reaktive expandierte Schaumrohmasse aufgetragen, und zwar durch Sprühen. Die aus der Sprühdüse austretende Tröpfchengröße ist relativ klein, beispielsweise 0,1 bis 1 mm. Bei dem dargestellten Ausführungsbeispiel handelt es sich beim Schaumauftrag 4 um expandierten Polyurethan-Weichschaum. Der Schaumauftrag ist in Figur 2 mit dem Bezugszeichen 4 kenntlich gemacht. Bei dem Schaumauftrag des dargestellten Ausführungsbeispiels handelt es sich um einen offenporigen Polyurethanweichschaum, der mit Stickstoff aufgeschäumt und in aufgeschäumtem Zustand auf der Dekorschicht 3 appliziert worden ist. Unmittelbar nach Aufbringen des Schaumauftrages 4, also zu einem Zeitpunkt, zu dem die Reaktionszeit in Bezug auf ihren Polymerisationsprozess gerade erst begonnen hat, wird ein Trägersubstrat 5 in Kontakt mit der Oberseite des Schaumauftrages 4 gebracht und etwas in diesen eingedrückt (siehe Figuren 3a, 3b). Bei dem dargestellten Ausführungsbeispiel handelt es sich bei dem Trägersubstrat 5 um ein steifes ABS-Kunststoffteil. Das Eindrücken des Trägersubstrates 5 in den Schaumauftrag 4 dient zur Schaumverteilung in dem Spalt (Hohlraum) zwischen der Dekorschicht 3 und dem Trägersubstrat 5 und zum Einbringen desselben in zu der Dekorschicht 3 weisende Hinterschnittstrukturen des Trägersubstrates 5. Derartige Hinterschnittstrukturen sind bei dem Trägersubstrat 5 beispielhaft in Form von schwalbenschwanzförmigen Hinterschnitten mit dem Bezugszeichen 6 kenntlich gemacht. Die Ausbildung dieser Hinterschnittstrukturen dient dem Zweck, das Trägersubstrat 5 an die polymerisierte Schaumlage nicht nur adhäsiv, sondern auch formschlüssig anzuschließen. Bei dem dargestellten Ausführungsbeispiel ist das Trägersubstrat 5 strukturiert und weist einen Vorsprung 7 auf, der tiefer in den Schaumauftrag 4 eingedrückt wird als die zu dem Vorsprung 7 benachbarten Abschnitte. Ausgenutzt wird hierbei die Fließfähigkeit bzw. Bewegbarkeit des Schaumauftrages 4 zum Zeitpunkt der Zusammenführung dieser mit dem Trägersubstrat 5.

Das Trägersubstrat 5 wird so weit in den Schaumauftrag 4 eingedrückt, bis der vordefinierte Abstand zur Dekorschicht 3 eingerichtet ist. Bei dem dargestellten Ausführungsbeispiel verfügt das Trägersubstrat 5 über Anschlagfortsätze, die bei Erreichen des vordefinierten Abstandes zur Dekorschicht 3 an der Oberseite der Form 1 anliegen. Der Schaumauftrag 4 ist mit einem Volumen aufgetragen worden, das größer ist als das eigentlich benötigte Raumvolumen, um den Spalt zwischen der Dekorschicht 3 und dem Trägersubstrat 5 in der in Figur 3b gezeigten Stellung zu füllen. Überschüssiger Schaum wird seitlich aus der Kavität 2 der Form herausgedrückt (siehe Figur 3b). Dieses geht einher mit einer gewissen Kompression des Schaumauftrages 4, was ohne Weiteres möglich ist, da es sich bei diesem um einen offenporigen Schaumauftrag handelt. Nach dem Positionieren des Trägersubstrates 5 wird gewartet, bis der Polymerisationsprozess abgeschlossen ist. Dann wird das fertiggestellte Innenverkleidungsteil 8 der Form 1 entnommen, ggf. gesäubert und kann anschließend weiterverarbeitet oder auch montiert werden. Das Innenverkleidungsteil 8 ist in Figur 4 gezeigt. Die polymerisierte Schaumlage ist darin mit dem Bezugszeichen 9 kenntlich gemacht.

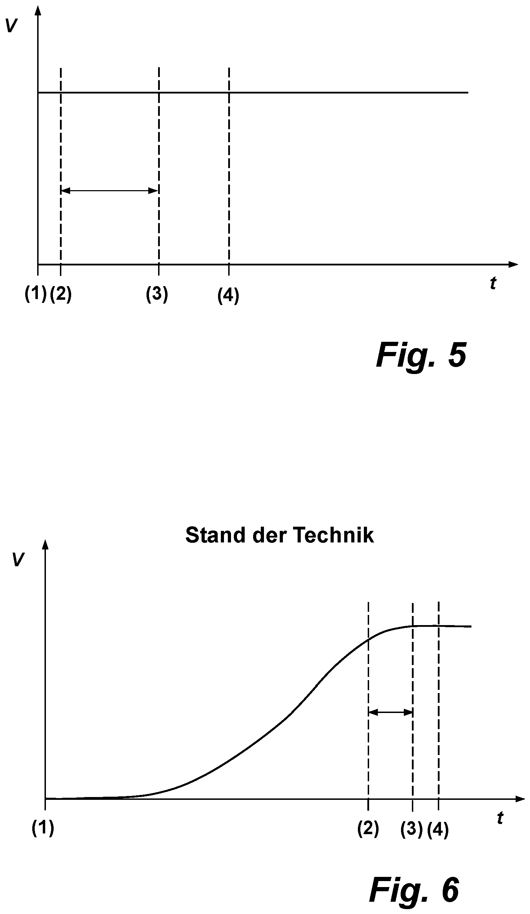

Die zeitliche Abfolge der Prozessschritte in Bezug auf das chemische Verhalten des expandierten Schaumauftrages ist dem Diagramm der Figur 5 zu entnehmen. In dem Diagramm der Figur 5 ist auf der x-Achse die Zeit und auf der y-Achse das Schaumvolumen aufgetragen. Da bei dem vorbeschriebenen Verfahren expandierter Schaum aufgetragen wird, bleibt das Schaumvolumen über die Zeit konstant. Das Schaumvolumen ändert sich durch den vorbeschriebenen Verdrängungsprozess beim Positionieren des Trägersubstrats 5 nicht notwendigerweise. Gleichwohl kann vorgesehen sein, dass mit dem Eindrücken des Trägersubstrates 5 eine gewisse Kompression des Schaumauftrages 4 bewirkt wird, typischerweise um 8-15 %. Zum Zeitpunkt (1) ist der expandierte Schaum durch Sprühen aufgetragen worden. Die Reaktionszeit des reaktiven Schaums beginnt mit dem Schaumauftrag zu laufen. Da die Rückseite der Dekorschicht 3 nicht über ihre gesamte Oberfläche zeitgleich besprüht werden kann, hat die Reaktionszeit, zu unterschiedlichen Zeiten über die Fläche der Rückseite der Dekorschicht 3 verteilt, begonnen, bevor zum Zeitpunkt (2) das Trägersubstrat 5 mit dem expandierten Schaumauftrag in Kontakt gebracht und positioniert wird. Das Zeitfenster, in dem bestimmungsgemäß das Trägersubstrat 5 positioniert wird, endet im Zeitpunkt (3). In dem Diagramm ist im Zeitpunkt (4) die Klebefreizeit erreicht. Dann ist die Oberfläche des Schaumauftrages 4 nicht mehr klebrig. Aus diesem Grunde endet das vorgesehene Zeitfenster mit hinreichend zeitlichem Abstand vor dem Zeitpunkt (4). Bei dem dargestellten Ausführungsbeispiel ist der reaktive Schaumauftrag 4 durch eine Beimengung von Katalysatoren so eingestellt, dass die Klebefreizeit bereits nach etwa 25 sec erreicht ist. Damit verbleibt bei diesem Verfahren ein Zeitfenster zum Positionieren des Trägersubstrates von etwa 15 bis 20 sec. Wird der expandierte Schaumauftrag anders eingestellt, und zwar dass die Reaktionszeit bis zur Klebefreizeit etwas länger ausgelegt ist, ist das Zeitfenster zum Positionieren des Trägersubstrates entsprechend länger. Das Zeitfenster kann somit eingerichtet werden. Einfluss auf die Bemessung dieses Zeitfensters kann auch die Fläche der Rückseite der Dekorschicht 3 haben, auf die der Schaumauftrag 4 zu applizieren ist. Eine größere Fläche benötigt mehr Zeit für die Schaumapplikation.

Das in Figur 6 gezeigte Diagramm zeigt die Verfahrensabfolge zum Herstellen eines Innenverkleidungsteils, wenn in einer offenen Form die reaktive, noch nicht expandierte Rohmasse auf die Rückseite einer Dekorschicht aufgetragen wird. Zum Positionieren des Trägersubstrates muss zunächst der Aufschäumprozess abgewartet werden, und zwar bis dieser vollständig oder jedenfalls fast vollständig abgeschlossen ist. Der Zeitpunkt (2) liegt daher in Bezug auf die Reaktionszeit notwendigerweise sehr viel später als bei dem in Figur 5 gezeigten Verfahrensablauf bei dem erfindungsgemäßen Verfahren. Das Zeitfenster, in dem das Trägersubstrat zu positionieren ist (Zeitintervall zwischen (2) und (3)), ist aufgrund der bei dem weitgehend fortgeschrittenen Polymerisationsprozess der zeitlichen Nähe der Klebefreizeit nur sehr kurz bemessen. Ein zu frühes Positionieren des Trägersubstrates, wenn in Kontakt mit der Schaumoberfläche gebracht, führt zu einer Ausbildung eines härteren Schaums. Ein zu spätes Positionieren des Trägersubstrates führt nicht mehr zu der gewünschten Qualität der adhäsiven Bindung. Schließlich ist die Klebefreizeit im Zeitpunkt (4) kurz danach erreicht. Zwar besteht die Möglichkeit, auch bei diesem Verfahren durch Einsatz von Katalysatoren die Reaktionszeit zu verkürzen. Damit wird jedoch auch das Zeitfenster kleiner, innerhalb dem das Trägersubstrat zu positionieren ist. Daher wird man bei diesem Verfahren die Reaktionszeit der schaumformenden Rohmasse so einstellen, dass das Zeitfenster für die Positionierung des Trägersubstrates hinreichend lang ist.

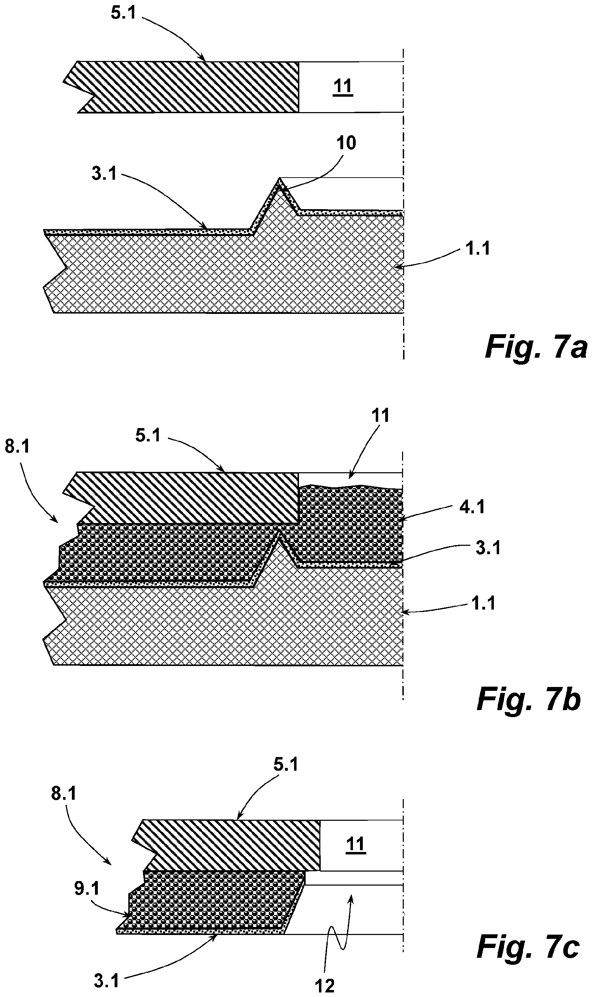

Figur 7a zeigt einen Ausschnitt einer Form 1.1, in der eine Dekorschicht 3.1 eingelegt bzw. an der Abformoberfläche der Form 1.1 gebildet worden ist. Die Form 1.1 ist ausgelegt, damit das damit herzustellende Innenverkleidungsteil mit einem Durchbruch hergestellt werden kann, beispielsweise zum Einsetzen der Luftaustrittsblende einer Klimaanlage. Zu diesem Zweck verfügt die Form 1.1 über einen eine Schwachstelle in der zu erstellenden Schaumlage bereitstellenden Vorsprung 10. Der Vorsprung 10 erstreckt sich umlaufend um den zu erstellenden Durchbruch und verjüngt sich in Richtung zu dem Trägersubstrat 5.1. Das Trägersubstrat 5.1 weist in dem Bereich des zu erstellenden Durchbruches eine Durchbrechung 11 auf.

Nach Besprühen der Rückseite der Dekorschicht 3.1 mit expandiertem Schaum zum Bereitstellen eines Schaumauftrages wird das Trägersubstrat 5.1 gegenüber der Dekorschicht 3.1 positioniert. In dem Bereich des Vorsprunges 10 ist der Abstand des Trägersubstrates 5.1 gegenüber der Dekorschicht 3.1 minimiert. Dieses bedeutet, dass die Dicke des Schaumauftrages 4.1 in dem Abstandsspalt zwischen dem Vorsprung 10 und dem Trägersubstrat 5.1 nur sehr gering ist. Zum Zwecke der Anbindung des Trägersubstrats 5.1 an die Dekorschicht 3.1 befindet sich zwischen der Dekorschicht 3.1 und dem Trägersubstrat 5.1 Schaumauftrag. Durch die Positionierung des Trägersubstrates 5.1 auf dem Schaumauftrag 4.1 (siehe Figur 7b) ist Schaumauftrag auch in die Durchbrechung 11 hineingedrückt worden. Nach Abschluss des Polymerisationsprozesses ist, hervorgerufen durch den Vorsprung 10, eine Sollbruchstelle bereitgestellt, an der der polymerisierte Schaumauftrag - die Schaumlage 9.1 - mit der daran angebundenen Dekorschicht 3.1 in dem zur Mitte der zu erstellenden Durchbrechung (durch die gestrichelte Linie angedeutet) herausgetrennt wird, beispielsweise durch Abreißen. Dieses wird typischerweise vorgenommen, nachdem das Innenverkleidungsteil 8.1 aus der Form 1.1 herausgenommen worden ist. In den auf diese Weise erstellten Durchbruch 12 des Innenverkleidungsteils 8.1 (s. Fig. 7c) kann dann ein zusätzliches Bauteil montiert werden, welches das Innenverkleidungsteil 8.1 durchgreift.

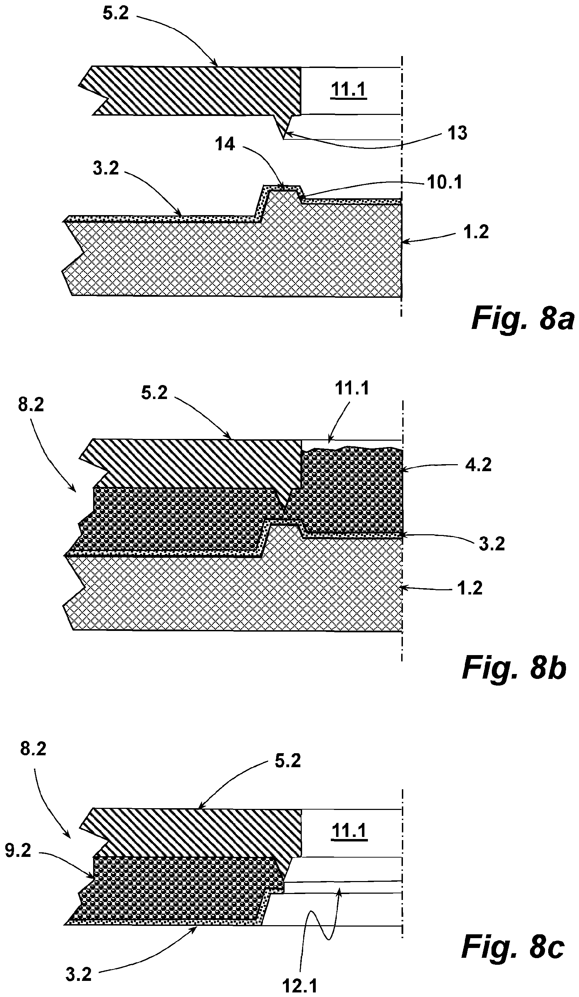

Figur 8a zeigt eine Ausgestaltung der Komponenten entsprechend dem Ausführungsbeispiel der Figuren 7a-7c, wobei bei dem Ausführungsbeispiel der Figur 8a das Trägersubstrat 5.2 einen Vorsprung 13 mit einer zur Form 1.2 weisenden Spitze trägt. Bei dem in den Figuren 8a, 8b gezeigten Ausführungsbeispiel trägt die Form 1.2 ebenfalls einen Vorsprung 10.1, der jedoch im Unterschied zu dem in Richtung zum Trägersubstrat 5.1 spitz zulaufenden Vorsprung 10 der Form 1.1 ein Plateau 14 aufweist. Das Innenverkleidungsteil 8.2 wird mit der Form 1.2 in gleicher Weise hergestellt, wie diese vorstehend zu dem Ausführungsbeispiel der Figuren 7a-7c beschrieben ist. Nach der Polymerisation des Schaumauftrages 4.2, wodurch die Schaumlage 9.2 bereitgestellt worden ist, wird durch Heraustrennen des polymerisierten Schaumes aus dem Bereich des zu erstellenden Durchbruches 12.1 mit der daran anhaftenden Dekorschicht 3.2 zum Freigeben des Durchbruches 12.1 herausgetrennt.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen im Einzelnen erläutert werden müsste.

### Bezugszeichenliste

- 1, 1.1, 1.2: Form
- 2: Kavität
- 3, 3.1, 3.2: Dekorschicht
- 4, 4.1, 4.2: Schaumauftrag
- 5, 5.1, 5.2: Trägersubstrat
- 6: Hinterschnittstruktur
- 7: Vorsprung
- 8, 8.1, 8.2: Innenverkleidungsteil
- 9, 9.1, 9.2: Schaumlage
- 10, 10.1: Vorsprung
- 11, 11.1: Durchbrechung
- 12, 12.1: Durchbruch
- 13: Vorsprung
- 14: Plateau

## Patentansprüche

1. Verfahren zum Herstellen eines Verkleidungsteils (8, 8.1, 8.2), insbesondere für den Innenraum eines Fahrzeuges, bei welchem Verfahren ein Trägersubstrat (5, 5.1, 5.2) gegenüber einer flexiblen Dekorschicht (3, 3.1, 3.2) unter Zwischenschaltung eines Schaumauftrages (4, 4.1, 4.2) positioniert und mit diesem adhäsiv verbunden wird, wobei die zur Bildung der Schaumlage (9, 9.1, 9.2) verwendete Rohmasse, mit einem Gas als physikalisches Treibmittel aufgeschäumt, auf die Rückseite der Dekorschicht (3, 3.1, 3.2) und/oder der zur Dekorschicht (3, 3.1, 3.2) weisenden Seite des Trägersubstrates (5, 5.1, 5.2) als reaktiver expandierter Schaumrohmasse aufgetragen wird, **dadurch gekennzeichnet, dass**, solange der expandierte Schaumauftrag (4, 4.1, 4.2) noch fließfähig ist, das Trägersubstrat (5, 5.1, 5.2) unter Zwischenschaltung des expandierten Schaumauftrages (4, 4.1, 4.2) in einem definierten Abstand zur Rückseite der Dekorschicht (3, 3.1, 3.2) positioniert wird, wobei mit dem Vorgang des Positionierens des Trägersubstrats (5, 5.1, 5.2) durch dieses zumindest bereichsweise ein Teil der den ursprünglichen Abstand der Dekorschicht (3, 3.1, 3.2) von dem Trägersubstrat (5, 5.1, 5.2) füllenden Schaumauftrag (4, 4.1, 4.2) verdrängt und plastisch komprimiert wird, so dass die Dekorschicht (3, 3.1, 3.2) mit dem Trägersubstrat (5, 5.1, 5.2) durch den Schaumauftrag (4, 4.1, 4.2) verbunden wird, und gehalten wird, bis der Vernetzungsprozess des Schaumauftrages (4, 4.1, 4.2) zumindest weitestgehend abgeschlossen ist.

2. Verfahren nach Anspruch 1, **dadurch gekennzeichnet, dass** das Trägersubstrat (5, 5,1, 5.2) gegenüber der Dekorschicht (3, 3.1, 3.2) in dem Reaktionszeitintervall, wenn 70 %, insbesondere wenn 50 % der Reaktionszeit noch nicht überschritten sind, positioniert wird.

3. Verfahren nach Anspruch 1 oder 2, **dadurch gekennzeichnet, dass** der expandierte Schaumauftrag (4, 4.1, 4.2) mit einem Volumen aufgetragen wird, das größer ist als das zur Spaltfüllung zwischen der Dekorschicht (3, 3.1, 3.2) und dem Trägersubstrat (5, 5.1, 5.2) benötigte Volumen.

4. Verfahren nach einem der Ansprüche 1 bis 3, **dadurch gekennzeichnet, dass** das Trägersubstrat (5, 5.1, 5.2) in Bezug auf seinen Abstand zur Dekorschicht (3, 3.1, 3.2) und in Bezug auf seine Position zur flächigen Erstreckung der Dekorschicht (3, 3.1, 3.2) gegenüber dem darauf aufgetragenen, expandierten Schaumauftrag (4, 4.1, 4.2) bewegt wird, bevor das Trägersubstrat (5, 5.1, 5.2) bis zum zumindest weitestgehenden Abschluss des Vernetzungsprozesses des Schaumauftrages (4, 4.1, 4.2) gehalten wird.

5. Verfahren nach einem der Ansprüche 1 bis 4, **dadurch gekennzeichnet, dass** das Trägersubstrat (5, 5.1, 5.2) mittels Abstandshaltern oder mittels eines Positionierungskalibers, auf dem das Trägersubstrat (5, 5.1, 5.2) positioniert ist, an der Rückseite der Dekorschicht (3, 3.1, 3.2) in Bezug auf den Abstand des Trägersubstrates (5, 5.1, 5.2) zur Rückseite der Dekorschicht (3, 3.1, 3.2) positioniert wird.

6. Verfahren nach einem der Ansprüche 1 bis 5, **dadurch gekennzeichnet, dass** die Prozessschritte in einer offenen Form (1, 1.1, 1.2) vorgenommen werden, wobei in einem ersten Schritt die Dekorschicht (3, 3.1, 3.2) in die Form eingelegt oder darin erzeugt wird und sich in der offenen Form (1, 1.1, 1.2) dann die weiteren Schritte daran anschließen.

7. Verfahren nach einem der Ansprüche 1 bis 6, **dadurch gekennzeichnet, dass** der Auftrag der expandierten Schaumrohmasse ganz oder teilweise auf eine an der zum Trägersubstrat weisenden Seite der Dekorschicht oder an der zur Dekorschicht weisenden Seite des Trägersubstrates angeordnete Schaumschicht aufgetragen wird.

8. Verfahren nach einem der Ansprüche 1 bis 7, **dadurch gekennzeichnet, dass** der aufgeschäumte, expandierte Schaumauftrag (4, 4.1, 4.2) durch Sprühen appliziert wird.

9. Verfahren nach einem der Ansprüche 1 bis 8, **dadurch gekennzeichnet, dass** zur Ausbildung der Schaumlage (9, 9.1, 9.2) eine reaktive aufgeschäumte expandierte Polyurethan-Schaumrohmasse, zur Ausbildung von insbesondere einem Polyurethan-Weichschaum oder von einem halbstarren Polyurethan-Schaum als Schaumauftrag (4, 4.1, 4.2) aufgetragen wird.

10. Verfahren nach Anspruch 9, **dadurch gekennzeichnet, dass** das Treibmittel in die Reaktionsmasse vor und/oder während des Mischprozesses oder in die zum Herstellen der Reaktionsmasse eingesetzte Polyol- und/oder die Isocyanat-Komponente eingebracht wird.

11. Verfahren nach einem der Ansprüche 9 oder 10, **dadurch gekennzeichnet, dass** die aufzutragende, durch das Treibmittel aufgeschäumte Schaumrohmasse wasserfrei, zumindest weitestgehend wasserfrei ist.

12. Verfahren nach einem der Ansprüche 1 bis 11, **dadurch gekennzeichnet, dass** das Trägersubstrat (5.1, 5.2) zumindest eine Durchbrechung aufweist und das Verkleidungsteil (8.1, 8.2) mit einer Sollbruchstelle zum Erstellen eines Durchbruches (12, 12.1) hergestellt wird.

13. Verfahren nach einem der Ansprüche 1 bis 12, **dadurch gekennzeichnet, dass** das Trägersubstrat für den expandierten Schaumauftrag permeabel ist und dass durch das Positionieren des Trägersubstrates gegenüber der Dekorschicht unter Zwischenschaltung des expandierten Schaumauftrages Schaummaterial in das Trägersubstrat eingearbeitet wird.

14. Verfahren nach Anspruch 13, **dadurch gekennzeichnet, dass** als Trägersubstrat eine Fasermatte verwendet wird.

15. Verkleidungsteil, insbesondere Innenverkleidungsteil für ein Fahrzeug, hergestellt gemäß dem Verfahren nach einem der Ansprüche 1 bis 14, **dadurch gekennzeichnet, dass** das Verkleidungsteil (8, 8.1, 8.2) über seine flächige Erstreckung trotz eventuell vorhandener unterschiedlicher Spaltmaße zwischen der Dekorschicht (3, 3.1, 3.2) und dem Trägersubstrat (5, 5.1, 5.2) eine homogene Härte seiner Schaumlage (9, 9.1, 9.2) aufweist.

## Claims

1. Method for producing a lining part (8, 8.1, 8.2), in particular for the interior of a vehicle, with which method a support substrate (5, 5.1, 5.2) is positioned opposite a flexible decorative layer (3, 3.1, 3.2) with the interposition of a foam coating (4, 4.1, 4.2), and the support substrate is adhesively connected thereto, wherein the raw foam compound used to form the foam layer (9, 9.1, 9.2) is foamed using a gas as a physical blowing agent and is applied onto the rear face of the decorative layer (3, 3.1, 3.2) and/or the face of the support substrate (5, 5.1, 5.2) facing towards the decorative layer (3, 3.1, 3.2), in the form of a reactive expanded raw foam compound, **characterised in that**, as long as the expanded foam coating (4, 4.1, 4.2) is still flowable, the support substrate (5, 5.1, 5.2) is positioned at a defined distance to the rear face of the decorative layer (3, 3.1, 3.2), with the interposition of the expanded film coating (4, 4.1, 4.2), wherein, during the process of positioning of the support substrate (5, 5.1, 5.2), at least in some regions, a part of the foam coating (4, 4.1, 4.2) filling the original distance between the decorative layer (3, 3.1, 3.2) and the support substrate (5, 5.1, 5.2) is displaced and plastically compressed, such that the decorative layer (3, 3.1, 3.2) is connected to the support substrate (5, 5.1, 5.2) by the foam coating (4, 4.1, 4.2), and is held until the cross-linking process of the foam coating (4, 4.1, 4.2) has at least mostly concluded.

2. Method according to claim 1, **characterised in that** the support substrate (5, 5.1, 5.2) is positioned opposite the decorative layer (3, 3.1, 3.2) in the reaction time interval when 70% of the reaction time, in particular 50% of the reaction time, has not yet been exceeded.

3. Method according to claim 1 or 2, **characterised in that** the expanded foam coating (4, 4.1, 4.2) is applied in a volume which is greater than the volume required for filling the gap between the decorative layer (3, 3.1, 3.2) and the support substrate (5, 5.1, 5.2).

4. Method according to any one of claims 1 to 3, **characterised in that** the support substrate (5, 5.1, 5.2) is moved, in relation to its distance from the decorative layer (3, 3.1, 3.2) and in relation to its position to the flat surface extension of the decorative layer (3, 3.1, 3.2), opposite the expanded foam coating (4, 4.1, 4.2) applied onto it, before the support substrate (5, 5.1, 5.2) is held until the at least very largely completed completion of the cross-linking process of the foam coating (4, 4.1, 4.2).

5. Method according to any one of claims 1 to 4, **characterised in that** the support substrate (5, 5.1, 5.2) is positioned, by means of spacer elements or by means of a positioning calibre, on which the support substrate (5, 5.1, 5.2) is positioned, on the rear of the decorative layer (3, 3.1, 3.2) in relation to the distance interval of the support substrate (5, 5.1, 5.2) to the rear of the decorative layer (3, 3.1, 3.2).

6. Method according to any one of claims 1 to 5, **characterised in that** the process steps are carried out in an open mould (1, 1.1, 1.2), wherein, in a first step, the decorative layer (3, 3.1, 3.2) are laid in the mould or are produced in it, and the further steps then follow on from this in the open mould (1, 1.1, 1.2).

7. Method according to any one of claims 1 to 6, **characterised in that** the application of the expanded raw foam compound takes place wholly or partially onto a side of the decorative layer facing towards the substrate, or onto the foam layer arranged on the side of the support substrate facing towards the decorative layer.

8. Method according to any one of claims 1 to 7, **characterised in that** the foamed expanded foam coating (4, 4.1, 4.2) is applied by spraying.

9. Method according to any one of claims 1 to 8, **characterised in that,** for the formation of the foam layer (9, 9.1, 9.2), a reactive foamed expanded polyurethane raw foam compound is applied, for the formation of, in particular, a polyurethane flexible foam or a semi-rigid polyurethane foam as a foam coating (4, 4.1, 4.2).

10. Method according to claim 9, **characterised in that** the blowing agent is introduced into the reaction compound before and/or during the mixing process or into the polyol and/or the isocyanate components used for the production of the reaction compound.

11. Method according to any one of claims 9 or 10, **characterised in that** the raw foam compound to be applied, which is foamed by the blowing agent, is free of water, or at least free of water to the greatest possible extent.

12. Method according to any one of claims 1 to 11, **characterised in that** the support substrate (5.1, 5.2) (5.1, 5.2) has at least one passage opening, and the lining part (8.1, 8.2) is produced with a predetermined break point in order to produce a passage opening (12, 12.1).

13. Method according to any one of claims 1 to 12, **characterised in that** the support substrate is permeable to the expanded foam layer, and that, due to the positioning of the support substrate in relation to the decorative layer, with the interposition of the expanded foam coating, foam material is introduced into the support substrate.

14. Method according to claim 13, **characterised in that** a fibre mat is used as the support substrate.

15. Lining part, in particular an interior lining part for a vehicle, produced in accordance with any one of claims 1 to 14, **characterised in that** the lining part (8, 8.1, 8.2), by means of its flat surface extension and, despite there possibly being different gap dimensions present between the decorative layer (3, 3.1, 3.2) and the support substrate (5, 5.1, 5.2), it has a homogenous hardness of its foam layer (9, 9.1, 9.2).

## Revendications

1. Procédé de fabrication d'une pièce de garniture (8, 8.1, 8.2), notamment pour l'habitacle d'un véhicule, lors duquel procédé un substrat porteur (5, 5.1, 5.2) est positionné par rapport à une couche décorative (3, 3.1, 3.2) flexible et lié à celle-ci par collage grâce à l'interposition d'une application de mousse (4, 4.1, 4.2) ; la masse brute utilisée pour former la couche de mousse (9, 9.1, 9.2), laquelle est transformée en mousse au moyen d'un gaz faisant office d'agent d'expansion physique, étant appliquée en tant que masse brute de mousse expansée par réaction, au dos de la couche décorative (3, 3.1, 3.2) et/ou sur la face du substrat porteur (5, 5.1, 5.2) orientée vers la couche décorative (3, 3.1, 3.2), **caractérisé en ce que,** tant que l'application de mousse (4, 4.1, 4.2) expansée est encore fluide, le substrat porteur (5, 5.1, 5.2) est positionné grâce à l'interposition de l'application de mousse (4, 4.1, 4.2) expansée avec une distance définie par rapport au dos de la couche décorative (3, 3.1, 3.2), au cours de laquelle étape de positionnement du substrat porteur (5, 5.1, 5.2), l'application de mousse (4, 4.1, 4.2) qui remplissait l'espace initial entre la couche décorative (3, 3.1, 3.2) et le substrat porteur (5, 5.1, 5.2 ) est, en partie, du moins dans certaines zones, repoussée et comprimée par ce dernier par effet plastique, de telle sorte que la couche décorative (3, 3.1, 3.2) est liée au substrat porteur (5, 5.1, 5.2) grâce à l'interposition de l'application de mousse (4, 4.1, 4.2) et reste maintenue, jusqu'à ce que le processus de réticulation de l'application de mousse (4, 4.1, 4.2) est, du moins dans une large mesure, terminé.

2. Procédé selon la revendication 1, **caractérisé en ce que** le substrat porteur (5, 5.1, 5.2) est positionné par rapport à la couche décorative (3, 3.1, 3.2) pendant l'intervalle de temps de réaction, avant de dépasser 70 % et notamment 50 % du temps de réaction.

3. Procédé selon la revendication 1, **caractérisé en ce que** l'application de mousse (4, 4.1, 4.2) expansée est faite avec un volume plus grand que le volume nécessaire pour remplir l'espace entre la couche décorative (3, 3.1, 3.2) et le substrat porteur (5, 5.1, 5.2).

4. Procédé selon l'une des revendications 1 à 3, **caractérisé en ce que** le substrat porteur (5, 5.1, 5.2) est bougé par rapport à l'application de mousse (4, 4.1, 4.2) expansée qui est mise en oeuvre, en modifiant sa distance par rapport à la couche décorative (3., 3.1, 3.2) et son positionnement par rapport à l'étendue plane de la couche décorative (3, 3.1, 3.2), et ce avant que le substrat porteur (5, 5.1, 5.2) ne soit maintenu jusqu'à la fin, ou presque, du processus de réticulation de l'application de mousse (4, 4.1, 4.2).

5. Procédé selon l'une des revendications 1 à 4, **caractérisé en ce que** le substrat porteur (5, 5.1, 5.2) est positionné au dos de la couche décorative (3, 3.1, 3.2), sur des écarteurs ou un calibre de positionnement, sur lequel est placé le substrat porteur (5, 5.1, 5.2), en tenant compte de la distance du substrat porteur (5, 5.1, 2) par rapport au dos de la couche décorative (3, 3.1, 3.2).

6. Procédé selon l'une des revendications 1 à 5, **caractérisé en ce que** les étapes du processus se déroulent dans un moule (1, 1.1, 1.2) ouvert, la couche décorative (3, 3.1, 3.2) étant déposée ou produite dans le moule au cours d'une première étape, laquelle est suivie d'autres étapes se déroulant dans le moule (1, 1.1, 1.2) ouvert.

7. Procédé selon l'une des revendications 1 à 6, **caractérisé en ce que** l'application de la masse brute de mousse expansée se fait en tout ou en partie sur la face de la couche décorative orientée vers le substrat porteur ou sur la couche de mousse disposée sur la face du substrat porteur orientée vers la couche décorative.

8. Procédé selon l'une des revendications 1 à 7, **caractérisé en ce que** l'application de mousse (4, 4.1, 4.2) expansée, transformée en mousse, se fait par pulvérisation.

9. Procédé selon l'une des revendications 1 à 8, **caractérisé en ce que** pour réaliser la couche de mousse (9, 9.1, 9.2) on applique, en tant qu'application de mousse (4, 4.1, 4.2), une masse brute de mousse expansée en polyuréthane réactive afin de former notamment une mousse souple en polyuréthane ou une mousse en polyuréthane semi-rigide.

10. Procédé selon la revendication 9, **caractérisé en ce que** l'agent d'expansion est introduit dans la masse réactive avant et/ou pendant le processus de mélange ou introduit dans les composants de polyol et/ou d'isocyanate utilisés pour fabriquer la masse réactive.

11. Procédé selon l'une des revendications 9 ou 10, **caractérisé en ce que** la masse brute de mousse à appliquer, expansée par l'agent d'expansion, est exempte, ou du moins largement exempte, d'eau.

12. Procédé selon l'une des revendications 1 à 11, **caractérisé en ce que** le substrat porteur (5.1, 5.2) présente au moins une découpe et que la pièce de garniture (8.1, 8.2) est réalisée avec une pré-découpe afin de réaliser une découpe (12, 12.1).

13. Procédé selon l'une des revendications 1 à 12, **caractérisé en ce que** le substrat porteur destiné à l'application de mousse expansée est perméable et que du matériau d'expansion est intégré au substrat porteur au moyen du positionnement du substrat porteur par rapport à la couche décorative par l'intermédiaire de l'application de mousse expansée.

14. Procédé selon la revendication 13, **caractérisé en ce que** l'on utilise une natte de fibres en guise de substrat porteur.

15. Pièce de garniture, notamment pièce de garniture pour l'intérieur d'un véhicule, fabriquée selon le procédé selon les revendications 1 à 14, **caractérisée en ce que** la pièce de garniture (8, 8.1, 8.2) présente sur son étendue plane, malgré d'éventuelles dimensions différentes de l'espace situé entre la couche décorative (3, 3.1, 3.2) et le substrat porteur (5, 5.1, 5.2) une dureté homogène de sa couche de mousse (9, 9.1, 9.2).
